# EUROPÄISCHE PATENTSCHRIFT

(11) **EP 2 540 031 B1**
(45) Veröffentlichungstag und Bekanntmachung des Hinweises auf die Patenterteilung: **14.06.2017**
(21) Anmeldenummer: 11704462.8
(22) Anmeldetag: 22.02.2011
(51) Int. Cl.: H04L 12/12, H04L 12/46, H04L 12/40

(54) **VERFAHREN ZUR AKTIVIERUNG EINER NETZWERK-KOMPONENTE EINES FAHRZEUG-NETZWERKSYSTEMS**
METHOD FOR ACTIVATING A NETWORK COMPONENT OF A MOTOR VEHICLE NETWORK SYSTEM
PROCÉDÉ POUR ACTIVER UN ÉLÉMENT RÉSEAU D'UN SYSTÈME DE RÉSEAU DE VÉHICULE

(30) Priorität: 22.02.2010 DE 102010008818
(43) Veröffentlichungstag der Anmeldung: 02.01.2013
(73) Patentinhaber: Continental Automotive GmbH, 30165 Hannover (DE)
(72) Erfinder: BALBIERER, Norbert, 93309 Kelheim (DE); NÖBAUER, Josef, 92445 Neukirchen-Balbini (DE); RATH, Andreas, 93047 Regensburg (DE)
(86) Internationale Anmeldenummer: PCT/EP2011/052608
(87) Internationale Veröffentlichungsnummer: WO 2011/101491

(56) Entgegenhaltungen:
- WO-A1-2009/044915
- WO-A1-2009/054769
- DE-A1- 10 242 051
- US-A1- 2002 006 139
- US-A1- 2007 041 387

## Beschreibung

Die Erfindung betrifft ein Verfahren zur Aktivierung mindestens einer temporär inaktiven Netzwerk-Komponente eines Netzwerksystems für ein Fahrzeug, insbesondere für ein Kraftfahrzeug. Die Erfindung betrifft weiterhin ein entsprechendes Netzwerksystem.

Bekannte Netzwerksysteme für Fahrzeuge, insbesondere Kraftfahrzeuge, basieren zumeist auf seriellen Bus-Systemen. Ein Beispiel für ein solches Bus-System zur Vernetzung von den diversen Steuergeräten zur Realisierung systemübergreifender Funktionen eines Fahrzeugs ist ein auf dem CAN-Bus (Controller Area Network) basierendes asynchrones, serielles Bussystem. Ein anderes Beispiel ist ein LIN: Local Interconnect Network Bus-System. Da die elektrische Energieversorgung bei vielen Fahrzeugen mittels eines Energiespeichers begrenzter Speicherfähigkeit erfolgt, ist es wünschenswert, dass nicht aktive Teile des Netzwerks keine oder möglichst wenig Leistung aufnehmen.

Bei den im Anwendungsbereich für Fahrzeuge verwendeten Bus-Systemen wird ein Energie-Detektionskonzept angewendet. Das gesamte Bus-System ist zunächst inaktiv, erst ein Energie-Impuls auf der Busleitung des Bus-Systems führt dazu, dass der Controller "aufwacht" und in Folge das gesamte System aktiviert. Der Energieimpuls kann dabei zum Beispiel ein Datenrahmen sein oder auch ein einzelner Spannungspuls. Der Ruhestrombedarf ist bei diesem System extrem gering, es werden jedoch alle an das Bus-System angeschlossenen Komponenten aktiviert und "wachen auf".

Für stationäre Netzwerke ist seit geraumer Zeit der "Wake on LAN" Standard (WOL) etabliert (LAN: Local Area Network) . Er ermöglicht das gezielte Wecken inaktiver Hosts im Netzwerk durch das sogenannte Magic Packet, einen Ethernet-Frame, der die MAC-Adresse des zu weckenden Hosts enthält und der vom entsprechenden Host-Ethernet-Controller erkannt wird.

Diese Technologie ist jedoch zur Verwendung im Automotive- bzw. Kraftfahrzeug-Bereich ungeeignet, da die Netzwerk-Controller selbst aktiv oder zumindest teilweise aktiv sein müssen, um ein solches Paket zu erkennen. Dadurch ist der Ruhestrombedarf für ein automobiles Umfeld deutlich zu groß.

Die WO 2009/054769 offenbart ein elektronisches / elektrisches Fahrzeug Infrastruktursystem für die Steuerung der elektronischen / elektrischen Funktionen und / oder Funktionen eines Fahrzeugs sowie ein Verfahren zur Steuerung eines solchen Systems, wobei das elektronische / elektrische Fahrzeug Infrastruktursystem mindestens zwei elektronischen / elektrischen Fahrzeugs Infrastruktur Teilmengen umfasst, und diese jeweils eine Vielzahl von elektronischen / elektrischen Fahrzeugs Infrastrukturelementen aufweisen.

Die WO 2009/044915 beschreibt ein Kommunikationssystem, das aufweist: mehrere Kommunikationsvorrichtungsgruppen, die jeweils mehrere Kommunikationsvorrichtungen aufweisen; mehrere Kommunikationsleitungen, die die Kommunikationsvorrichtungen auf der Grundlage der Kommunikationsvorrichtungsgruppen verbinden; mehrere Vermittlungsvorrichtungen, die mit einer oder mehreren Kommunikationsleitungen unter den Kommunikationsleitungen verbunden sind und Daten, die von einer Kommunikationsvorrichtung über eine Kommunikationsleitung zu einer anderen Kommunikationsvorrichtung übertragen werden, vermitteln, wobei die Vermittlungsvorrichtungen mit einem Kommunikationsmedium, das sich von der Kommunikationsleitung unterscheidet, verbunden sind und aufweisen: eine Einrichtung zum Übertragen von Daten von jeder Kommunikationsvorrichtung, die über eine Kommunikationsleitung verbunden ist, zu einer speziellen Vermittlungsvorrichtung; und eine Einrichtung zum Übertragen von Daten von der speziellen Vermittlungsvorrichtung zu jeder Kommunikationsvorrichtung, und wobei die spezielle Vermittlungsvorrichtung aufweist: eine Einrichtung zum Speichern von Daten, die von einer anderen Vermittlungsvorrichtung und einer Kommunikationsvorrichtung, die über eine Kommunikationsleitung verbunden ist, übertragen werden, in einem Speicher; eine Einrichtung zum Auslesen von Daten aus dem Speicher und zum Übertragen der Daten zu einer anderen Vermittlungsvorrichtung oder der Kommunikationsvorrichtung.

Die US 2002/006139 offenbart ein Multiplex-Kommunikationssystem von einer Vielzahl von Netzwerken und eine Datenübertragungseinheit. Wenn ein Ereignis in einem Knoten zu einem der Netze, der Knoten (Senderknoten) erfolgt bzw. eintritt, wird ein Wake-up-Frame gesendet, bevor es ein Ereignis Frame sendet. In Antwort auf das Weck-Frame, werden die Knoten im gleichen Netzwerk, der die Senderknoten umfasst, gehört und aktiviert und die Datenübertragungseinheit sendet ein Wake-up-Frame an das jeweiligen Netzwerk für die Aktivierung der Netzwerke. Wenn bestimmt wird, dass jedes der Netzwerke aktiviert ist, sendet der Datenübertragungseinheit einen Netzwerkaktivierungs Benachrichtigen (NAN) Frame über das Netzwerk an alle Netzwerke.

Die DE 10242051 A1 beschreibt Datenbussystem für ein Kraftfahrzeug mit mehreren Busteilnehmern, von denen einer zur Steuerung eines Ruhe- bzw. Weckzustandes der Busteilnehmer als ein Steuersignal empfangender Hauptbusteilnehmer definiert ist, der über einen steuerbaren Schalter mit einer Spannungsquelle des Kraftfahrzeuges verbunden ist, wobei der Hauptbusteilnehmer mit den weiteren Busteilnehmern in Reihe geschaltet ist, um diese über den Schalter mit Spannung zu versorgen, wobei der Hauptbusteilnehmer in Abhängigkeit von dem Steuersignal zum einen den Schalter derart ansteuert, dass die Spannungsversorgung zum störungsfreien Beenden bzw. Starten der Funktionen der Busteilnehmer aufrechterhalten wird, und zum anderen ein Signal zum Beenden bzw. Starten der Funktionen der Busteilnehmer an dieselben sendet.

Die US 2007/041387 A1 offenbart die Versorgung mit Energie durch Kommunikationskabel zwischen einer Switch-Einrichtung und anderen Netzwerk-Komponenten eines Switch-Netzwerks in Kraftfahrzeugen.

Aufgabe der vorliegenden Erfindung ist es daher, ein Verfahren zur Aktivierung mindestens einer temporär nicht aktiven Netzwerk-Komponente eines Netzwerkes für ein Fahrzeug bereitzustellen, bei dem einzelne Netzwerk-Komponenten gezielt aktiviert werden können.

Die Lösung der Aufgabe erfolgt erfindungsgemäß durch die Merkmale des Anspruchs 1. Vorteilhafte Ausgestaltungen der Erfindung sind in den Unteransprüchen angegeben.

Bei dem erfindungsgemäßen Verfahren ist eine zentrale Netzwerkeinrichtung des Netzwerksystems über einen Pfad innerhalb des Netzwerksystems mit der Netzwerk-Komponente signaltechnisch verbunden. Der Pfad führt zumindest teilweise über ein Netzwerk-Segment des Netzwerksystems, wobei das Netzwerk-Segment die Netzwerk-Komponente und eine ihr zugeordnete erste Aktivierungseinrichtung unverzweigt mit einer im Pfad angeordneten Switch-Einrichtung und einer dieser Switch-Einrichtung zugeordneten zweiten Aktivierungseinrichtung signaltechnisch verbindet, und wobei die zentrale Netzwerkeinrichtung die Aktivierungseinrichtung mittels der Switch-Einrichtung durch senden eines Netzwerkfunktions-Kontrollsignals anspricht. Die zentrale Netzwerkeinrichtung des Netzwerksystems weist insbesondere ein Netzmanagermodul auf.

Die Netzwerk-Komponente ist ein elektrisches Gerät, insbesondere ein Steuergerät, einer Fahrzeugkomponente des Fahrzeugs, bevorzugt des Kraftfahrzeugs. Um den Energiebedarf des Fahrzeugs zu minimieren wird das elektrische Gerät temporär inaktiviert, wenn es nicht benötigt wird.

In einem besonders einfach aufgebauten Netzwerksystem ist die zentrale Netzwerkeinrichtung des Netzwerksystems über jeweils einen Pfad innerhalb des Netzwerksystems mit der entsprechenden Netzwerk-Komponente signaltechnisch verbunden, wobei der jeweilige Pfad vollständig über ein entsprechendes Netzwerk-Segment führt. Bei diesem Netzwerksystem weist die zentrale Netzwerkeinrichtung die Switch-Einrichtung selber auf oder ist mittels eines anderen Netzwerk-Segments mit dieser signaltechnisch verbunden.

Während das Netzwerk-Segment der jeweiligen Netzwerk-Komponente eindeutig zugeordnet ist, kann das andere Netzwerk-Segment mehreren Netzwerk-Komponenten zugeordnet sein.

Das Netzwerkfunktions-Kontrollsignal bevorzugt mindestens ein Spannungspuls, den eine Komponente (Netzwerkeinrichtung, Switch-Einrichtung und/oder Netzwerk-Komponente) auf die Signalleitung des entsprechenden Netzwerk-Segments legt.

Das Verfahren wird insbesondere zur Aktivierung der temporär inaktiven Netzwerk-Komponente eines Fahrzeug-Netzwerksystems verwandt.

Ein Gesamt-Netzwerk kann dabei aus einem einzelnen NetzwerkSystem oder mehreren miteinander verknüpften Netzwerk-Systemen bestehen. Besteht das Gesamt-Netzwerk aus mehreren Netzwerk-Systemen, so kann es mehrere bezüglich ihres zugeordneten Systems zentrale Netzwerkeinrichtungen geben, die zusammen ein globales Netzwerk-Management bilden.

Gemäß einer bevorzugten Ausgestaltung der Erfindung ist vorgesehen, dass die zentrale Netzwerkeinrichtung zumindest während der Aktivierung (a) die Netzwerk-Komponente oder (b) zumindest deren zugeordnete erste Aktivierungseinrichtung mittels der Switch-Einrichtung über mindestens eine Signalleitung (beziehungsweise Datenleitung) des Netzwerk-Segments zusätzlich mit elektrischer Energie versorgt.

In einer bevorzugten Ausführungsform ist dabei vorgesehen, dass das Netzwerkfunktions-Kontrollsignal durch die Aufnahme der Energieversorgung über die Signalleitung gebildet wird. Die Aufnahme der Energieversorgung bewirkt eine Spannungsänderung, insbesondere einen Spannungssprung, auf der entsprechenden Signalleitung, der das Netzwerkfunktions-Kontrollsignal darstellt. In diesem Fall benötigt die Netzwerkkomponente keine als Energy-Dectect-Modul ausgebildete Aktivierungseinrichtung, sondern die Netzwerkkomponente selbst bildet die Aktivierungseinrichtung.

Insbesondere ist vorgesehen, dass die Energieversorgung simultan zur wechselseitigen Signalübertragung zwischen der ersten und der zweiten Aktivierungseinrichtung über die Signalleitung erfolgt. Mittels entsprechendem Multiplex-Verfahren werden dabei die Signale und die Versorgungsleistung zusammengefasst (gebündelt) und simultan über die Signalleitung(en) übertragen. Dieses Bündeln wird oft auch "multiplexen" genannt. Auf Empfänger-Seite werden die Signale und die Versorgungsleistung anschließend wieder entbündelt (demultiplexen).

Gemäß einer bevorzugten Ausgestaltung der Erfindung ist vorgesehen, dass die erste Aktivierungseinrichtung die Netzwerk-Komponente nach Erhalt des Netzwerkfunktions-Kontrollsignals aktiviert und der zweiten Aktivierungseinrichtung anschließend ihrerseits ein weiteres Netzwerkfunktions-Kontrollsignal zur Bestätigung der Aktivierung zusendet.

Gemäß einer weiteren bevorzugten Ausgestaltung der Erfindung ist vorgesehen, dass die zweite Aktivierungseinrichtung die Switch-Einrichtung nach Erhalt des weiteren Netzwerkfunktions-Kontrollsignals in einen Sende-/Empfangszustand bringt. Mit diesem Schritt ist die Aktivierung vollständig abgeschlossen, und die Netzwerk-Komponente kann mit der Switch-Einrichtung über das zugeordnete Netzwerk-Segment bidirektional kommunizieren.

Gemäß einer bevorzugten Ausführungsform der Erfindung ist das Netzwerk ein Ethernet-Netzwerk. Bei einem Ethernet-Netzwerk sind die Netzwerk-Komponenten und eine zentrale Netzwerkeinrichtung (z. B. als Hosts), Switch-Einrichtungen und eine entsprechende Netzwerk-Struktur mit Netzwerk-Segmenten, die jeweiligen Hosts zugeordnet sind, bereits bekannt. Das Netzwerkfunktions-Kontrollsignal ist zum Beispiel als NLP (NLP: Normal Link Pulses) ausgebildet.

Alternativ ist das Netzwerk ein Quasi-Ethernet-Netzwerk, bei dem -bezüglich der Terminologie des OSI-Schichtmodells- die Schicht 2 (Sicherungsschicht) gemäß Ethernet-Protokoll ausgeführt ist, während die Schicht 1 (Bitübertragungsschicht) anders als im Ethernet-Protokoll ausgeführt ist. Beispiel für ein solches Quasi-Ethernet-Netzwerk ist ein BroadR-Reach-Ethernet Netzwerk. Hierbei handelt es sich um ein spezielles Verfahren der Bitübertragungsschicht(Schicht 1 Verfahren), in dem die Schicht 2 (MAC-Layer) des Ethernet-Protokolls unverändert verwendet wird.

In einer weiteren bevorzugten Ausführungsform der Erfindung ist das Netzwerkfunktions-Kontrollsignal nur durch die "normale" Datenübertragung repräsentiert, d. h., das schlichte Senden von Daten mit undefiniertem Inhalt kann von der Aktivierungseinheit auf der Empfängerseite erkannt werden.

Wird die Netzwerk-Komponente oder zumindest deren zugeordnete erste Aktivierungseinrichtung über die Signalleitung mit elektrischer Energie versorgt, so handelt es sich bei der Signalleitung um eine entsprechende Datenleitung des Ethernet-Netzwerks. Generell ist eine Energieversorgung über Ethernet unter dem Begriff "Power over Ethernet" (PoE) entsprechend dem Standard IEEE 802.3af bekannt. Erfindungsgemäße Ausgestaltungen der Energieversorgung über Ethernet sind jedoch nicht auf diesen Standard beschränkt.

Gemäß einer bevorzugten Ausführungsform der Erfindung ist vorgesehen, dass das Netzwerksystem eine von der zentralen Netzwerkeinrichtung, der mindestens einen Switch-Einrichtung und den Netzwerk-Komponenten gebildete Baum-Topologie aufweist. Diese Topologie ist zur Realisierung des erfindungsgemäßen Verfahrens besonders geeignet. Alternativ weist das Netzwerksystem bevorzugt eine Maschen-Topologie auf.

Insbesondere ist die Netzwerk-Komponente und/oder die Netzwerkeinrichtung ein Steuergerät einer Fahrzeug-Komponente oder zumindest Teil eines solchen Steuergerätes.

Die Erfindung betrifft weiterhin ein Netzwerksystem eines Fahrzeugs, insbesondere Kraftfahrzeugs, bevorzugt zur Durchführung eines vorstehend genannten Verfahrens, das zur Aktivierung mindestens einer temporär inaktiven Netzwerk-Komponente geeignet ist. Das erfindungsgemäße Netzwerksystem weist eine zentrale Netzwerkeinrichtung auf, die über einen Pfad innerhalb des Netzwerksystems mit der Netzwerk-Komponente signaltechnisch verbunden ist, wobei der Pfad zumindest teilweise über ein Netzwerk-Segment des Netzwerksystems führt und das Netzwerk-Segment die Netzwerk-Komponente und eine ihr zugeordnete erste Aktivierungseinrichtung unverzweigt mit einer im Pfad angeordneten Switch-Einrichtung und einer ihr zugeordneten zweiten Aktivierungseinrichtung signaltechnisch verbindet, und wobei die zentrale Netzwerkeinrichtung die erste Aktivierungseinrichtung mittels der Switch-Einrichtung durch Senden eines Netzwerkfunktions-Kontrollsignals anspricht. Das entsprechende Netzwerksystem ist ein Fahrzeug-Netzwerksystem, insbesondere ein Fahrzeug-Netzwerksystem eines Kraftfahrzeugs.

Die Netzwerk-Komponente ist ein elektrisches Gerät, insbesondere ein Steuergerät, einer Fahrzeugkomponente des Fahrzeugs, bevorzugt des Kraftfahrzeugs. Um den Energiebedarf des Fahrzeugs zu minimieren wird das elektrische Gerät temporär inaktiviert, wenn es nicht benötigt wird.

Gemäß einer bevorzugten Ausführungsform der Erfindung ist vorgesehen, dass die erste Netzwerk-Komponente oder zumindest die ihr zugeordnete erste Aktivierungseinrichtung von der zentralen Netzwerkeinrichtung mittels der Switch-Einrichtung über mindestens eine Signalleitung des Netzwerk-Segments mit elektrischer Energie versorgbar ist beziehungsweise versorgt wird. Die elektrische Energieversorgung innerhalb des Netzwerks ist bevorzugt eine auf mindestens einen Parameter der allgemeinen Energieversorgung im Fahrzeug angepasste elektrische Energieversorgung. Dieser Parameter ist zum Beispiel die Spannung U, insbesondere die bei Stromversorgungsnetzen (sogenannten Bordnetzen) von Kraftfahrzeugen übliche Spannung von 12 Volt (U = 12 V).

Insbesondere ist dabei vorgesehen, dass die Anordnung aus versorgender Switch-Einrichtung, versorgter Netzwerk-Komponente, erster und zweiter Aktivierungseinrichtung sowie der diese verbindende Signalleitung eine Energieversorgung simultan zur wechselseitigen Signalübertragung zwischen der ersten und der zweiten Aktivierungseinrichtung über die Signalleitung ermöglicht.

Gemäß einer bevorzugten Ausführungsform der Erfindung ist das Netzwerk ein Ethernet-Netzwerk. Bei einem Ethernet-Netzwerk sind Netzwerk-Komponenten und eine zentrale Netzwerkeinrichtung (z. B. als Hosts), Switch-Einrichtungen und eine entsprechende Netzwerk-Struktur mit Netzwerk-Segmenten, die jeweiligen Hosts zugeordnet sind, bereits bekannt.

Gemäß einer bevorzugten Ausführungsform der Erfindung ist vorgesehen, dass das Netzwerksystem eine von der zentralen Netzwerkeinrichtung, der mindestens einen Switch-Einrichtung und den Netzwerk-Komponenten gebildete Baum-Topologie aufweist. Diese Topologie ist zur Realisierung des erfindungsgemäßen Verfahrens besonders geeignet. Alternativ weist das Netzwerksystem bevorzugt eine Maschen-Topologie auf.

Insbesondere ist die Netzwerk-Komponente und/oder die Netzwerkeinrichtung ein Steuergerät einer Fahrzeug-Komponente oder zumindest Teil eines solchen Steuergerätes.

Die Erfindung betrifft schließlich auch ein Kraftfahrzeug mit einem vorstehend genannten Netzwerksystem, insbesondere einem Ethernet-Netzwerk.

Die Erfindung wird nachfolgend in beispielhafter Weise anhand der Zeichnungen erläutert. Die Erfindung ist jedoch nicht auf die dargestellten Ausführungsbeispiele beschränkt. Es zeigen:
- Fig. 1: einen schematischen Aufbau eines erfindungsgemäßen Netzwerksystems gemäß einer ersten Ausführungsform,
- Fig. 2: als sogenannte "Normal Link Pulses" ausgebildete Netzwerkfunktions-Kontrollsignale,
- Fig. 3: einen Ausschnitt eines schematischen Aufbau eines erfindungsgemäßen Netzwerksystems gemäß einer zweiten Ausführungsform,
- Fig. 4: ein Status-Diagramm einer sogenannten "Port State-Machine" eines Netzwerksystems,
- Fig. 5: einen schematischen Aufbau eines erfindungsgemäßen Netzwerksystems gemäß einer weiteren Ausführungsform,
- Fig. 6: einen schematischen Aufbau eines erfindungsgemäßen Netzwerksystems gemäß noch einer weiteren Ausführungsform,
- Fig. 7: als Einsetzen der Spannungsversorgung ausgebildetes Netzwerkfunktions-Kontrollsignal mit aufmodulierten Datenübertragungssignalen und
- Fig. 8 - 10: die exemplarische Darstellung von drei Ausführungsformen von Aktivierungseinrichtungen.

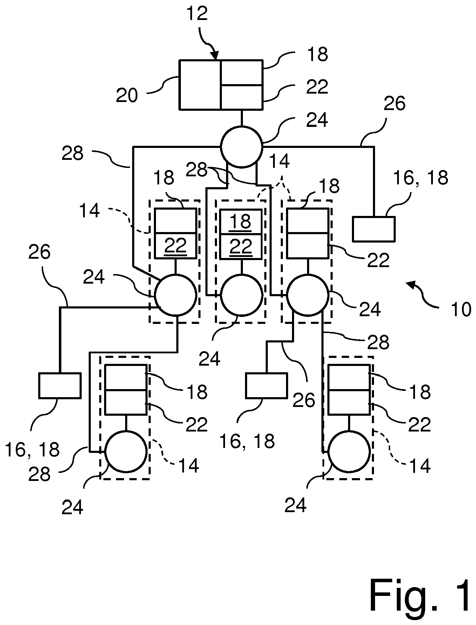

Die Fig. 1 zeigt einen schematischen Aufbau eines erfindungsgemäßen Netzwerksystems 10 mit einer von einer zentralen Netzwerkeinrichtung 12, mehreren Switch-Einrichtungen 14 und mehreren Netzwerk-Komponenten 16 gebildeten Baum-Topologie. Das Netzwerksystem 10 ist dabei als Ethernet-Netzwerk ausgebildet. Die zentrale Netzwerkeinrichtung 12 umfasst einen Host 18, einen Netz-Manager 20 (Netz-Managermodul), ein Switch-Manager 22 (Switch-Managermodul) und einen Switch 24. Über ein Netzwerk-Segment 26 ist die zentrale Netzwerkeinrichtung 12 mit einer Netzwerk-Komponente 18 und über drei andere Netzwerk-Segmente 28 mit drei Switch-Einrichtungen 14 mit Switch 24, Switch-Manager (Switch-Managermodul) 22 und Host 18 signaltechnisch verbunden. Die Switch-Einrichtungen 14 sind ihrerseits über Netzwerk-Segmente 26 mit Netzwerk-Komponenten 16 und über andere Netzwerk-Segmente 28 mit weiteren Switch-Komponenten 14 signaltechnisch verbunden, wobei die Baum-Struktur entsteht.

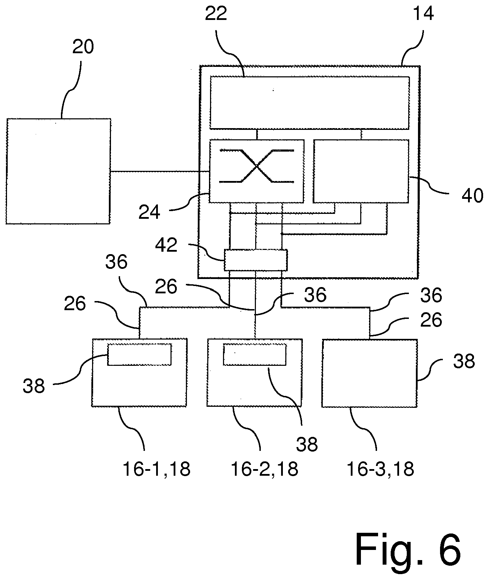

Jeder der Netzwerk-Komponenten 16 ist eine als sogenanntes "Energy-Dectect-Modul" ausgebildete erste Aktivierungseinrichtung zugeordnet, und jeder der Switch-Einrichtungen 14 ist eine als "Energy-Dectect-Modul" ausgebildete zweite Aktivierungseinrichtung zugeordnet (Aktivierungseinrichtungen erst in Fig. 6 gezeigt). Die Leistungsaufnahme der ersten Aktivierungseinrichtung ist geringer als die Leistungsaufnahme der zugeordneten aktiven Netzwerk-Komponenten 16, die Leistungsaufnahme der zweiten Aktivierungseinrichtung ist geringer als die Leistungsaufnahme der zugeordneten aktiven Switch-Einrichtung 14 beziehungsweise der zugeordneten zentralen Netzwerkeinrichtung.

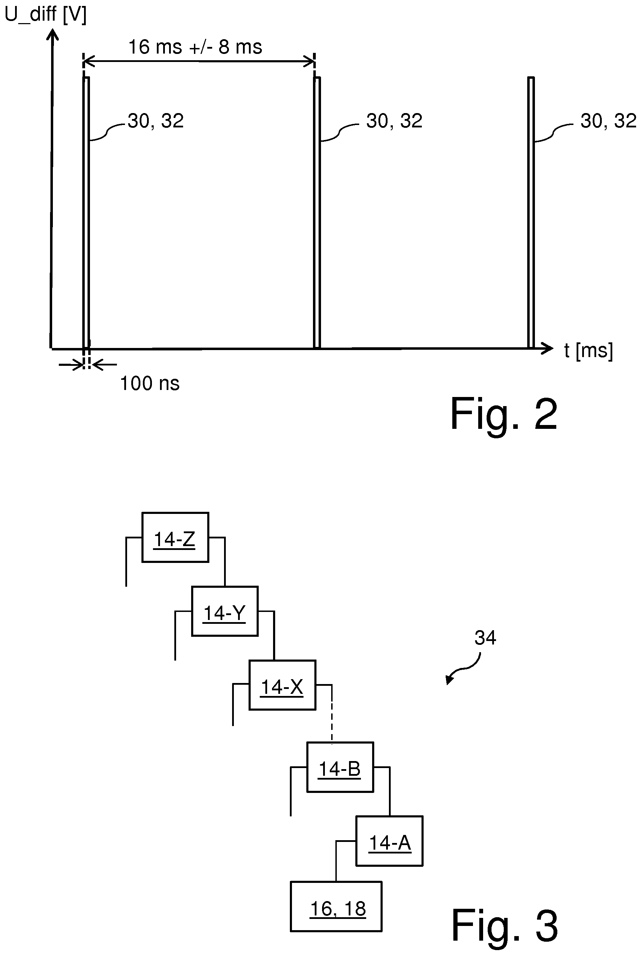

Die Fig. 2 zeigt den zeitlichen Ablauf von als Rechteckimpulsen (genauer: sogenannten NLPs - NLP: Normal Link Pulses) ausgebildeten Netzwerkfunktions-Kontrollsignalen 30 zum Testen des Zustands einer Verbindung (eines Links) bei einem Ethernet-Netzwerk. Dazu ist in einem Graphen die Spannung U_diff über der Zeit t aufgetragen. Die Netzwerkfunktions-Kontrollsignale 30, also die Pulse 32 (NLPs), haben eine Pulsbreite von 100 ns und einen Pulsabstand von 16 ms +/- 8 ms.

Diese Netzwerkfunktions-Kontrollsignale 30 werden erfindungsgemäß zum Aktivieren einer temporär inaktiven Netzwerk-Komponente 16 und zur Bestätigung der Aktivierung genutzt.

Es ergibt sich folgende Funktion innerhalb eines Netzwerksystems 10, bei dem eine zentrale Netzwerkeinrichtung 12 über einen Pfad innerhalb des Netzwerksystems 10 mit der temporär inaktiven Netzwerk-Komponente 16 signaltechnisch verbunden ist, wobei der Pfad zumindest teilweise über ein Netzwerk-Segment 26 des Netzwerksystems 10 führt und das Netzwerk-Segment 26 die Netzwerk-Komponente 16 und eine ihr zugeordnete erste Aktivierungseinrichtung unverzweigt mit einer im Pfad angeordneten Switch-Einrichtung 14 und einer ihr zugeordneten zweiten Aktivierungseinrichtung signaltechnisch verbindet, wobei folgende Schritte vorgesehen sind:
- die zentrale Netzwerkeinrichtung 12 spricht die erste Aktivierungseinrichtung der Netzwerk-Komponente 16 mittels der Switch-Einrichtung 14 durch das Senden eines Netzwerkfunktions-Kontrollsignals 30 an,
- die erste Aktivierungseinrichtung aktiviert die Netzwerk-Komponente 16 nach Erhalt des Netzwerkfunktions-Kontrollsignals 30 und sendet der zweiten Aktivierungseinrichtung der Switch-Einrichtung 14 anschließend ihrerseits ein weiteres Netzwerkfunktions-Kontrollsignal 30 zur Bestätigung der Aktivierung zu, worauf
- die zweite Aktivierungseinrichtung die Switch-Einrichtung 14 nach Erhalt des weiteren Netzwerkfunktions-Kontrollsignals 30 in einen Sende-/Empfangszustand bringt.

Im Folgenden soll das sich ergebende Konzept noch einmal mit anderen Worten beschrieben werden:
Ein Switched Ethernet besteht physikalisch aus Punkt-zu-Punkt Verbindungen. Hier kann ein Energy-Detect-Prinzip also individuell für einzelne Hosts 18 angewendet werden. Es würde nicht das gesamte Netz aufwachen, da nur ein Host 18, insbesondere eine Netzwerk-Komponente 16, und ein Switch-Port (nicht gezeigt) der Switch-Einrichtung 14 physikalisch mit einer Leitung (dem Netzwerksegment 26) verbunden sind.

Durch gezielte Steuerung der Aktivität auf einem Link kann ein Host 18, insbesondere eine Netzwerk-Komponente 16, demnach gezielt aktiviert oder deaktiviert werden. Der Switch 24 muss dazu den jeweiligen Port ein- oder ausschalten. Bei eingeschaltetem Port werden Link-Pulse (NLPs) 32 auf die Leitung (das Netzwerksegment 26) gelegt.

Die Link-Pulse 32 können durch eine als Energy-Detect-Modul ausgebildete Aktivierungseinrichtung erkannt und deren Vorhandensein durch einen elektrischen Ausgang angezeigt werden. Der Zustand dieses Ausganges kann einen Wake-Up (ein Aktivieren) oder einen Shut-Down (ein Inaktivieren) auslösen.

Die Konfiguration der Ports wird durch den Switch-Manager (das Switch-Managermodul) 22 durchgeführt. Es handelt sich dabei um eine Software, die für die gesamte Konfiguration, Überwachung und Steuerung eines Switches 24 zuständig ist. Jeder Port eines Switches 24 wird vom Switch-Manager 22 als Finite Zustandsmaschine modelliert und behandelt.

Der Netz-Manager (das Netz-Managermodul) 20 bildet das Herzstück des Konzeptes. Er ist der zentrale Management-Knoten, dem die Konfiguration und Überwachung des gesamten Netzes (Netzwerksystem 10) obliegt. Diese Software besitzt den Überblick über die gesamte Topologie des Netzwerks 10 und über den Zustand der einzelnen Hosts 18. Er kann mit den einzelnen Switch-Managern 22 kommunizieren und so gezielt einzelne Hosts 18 aktivieren und deaktivieren lassen.

Das Gesamtkonzept stellt die Interaktionen zwischen den drei einzelnen Modulen (zentrale Netzwerkeinrichtung 12 mit Netz-Manager 20, Netzwerk-Komponente 16 mit erster Aktivierungseinrichtung und Switch-Einrichtung 14 mit Switch-Manager 22 und zweiter Aktivierungseinrichtung) dar.

Die erste Frage die sich zur Struktur des Netzwerk-Managements stellt ist, ob es sich um eine zentralisierte oder verteilte Managementarchitektur handelt. Verteiltes Management bietet zwar eine höhere Ausfallsicherheit, ist aber wesentlich komplexer und schwer zu handhaben. Zudem verursacht die notwendige Kommunikation zwischen den verteilten Management-Knoten zusätzliche Datenlast. In der Regel ist ein einfaches, unkompliziertes Managementkonzept die bessere Wahl. In diesem Sinne ist auch das hier verwendete Konzept ausgelegt.

Aus diesem Grund ist das vorgestellte Management-Konzept zentral (mit zentraler Netzwerkeinrichtung 12). Der Netz-Manager 20 ist also eine zentrale Instanz und nicht auf mehrere Netz-Knoten verteilt. Wie bereits erwähnt, ist er für alle das Netz betreffenden Management-Aufgaben zuständig. Er kennt die Topologie des Netzes 10 und kennt den Zustand aller im Netz befindlichen Hosts 18. Im Rahmen dieses Konzeptes wird nur der Bereich Energiemanagement abgedeckt, der Netz-Manager 20 kann jedoch auch alle anderen notwendigen Management-Funktionen übernehmen.

In der nächsten Hierarchieebene gibt es eine beliebige Anzahl von Switch-Einrichtungen 14 mit Switches 24. Dabei handelt es sich um "Managed Switches" mit einer beliebigen Anzahl Ports. Der Switch-Manager 22 der Switch-Einrichtung 14 ist dafür verantwortlich den Switch 24 zu konfigurieren und zu steuern und kann mit anderen Netzknoten kommunizieren.

An den Ports dieser Switches 24 können weitere Switches 24 als nächste Hierarchieebene angeschlossen sein. Dabei kann es beliebig viele solcher Hierarchieebenen geben. Die Endpunkte dieser Baum-Zweige sind die Hosts 18. Die Switches 24 selbst können ebenfalls auf Host-Geräten (Hosts 18) sitzen und die Switch-Einrichtungen bilden. Der Switch-Manager 22 und die Host-Software können als zwei Prozesse auf ein- und derselben CPU laufen.

Der Switch-Manager 22 stellt den Kommunikationspartner des Netz-Managers 20 dar. Soll ein Knoten aktiviert werden, kontaktiert der Netz-Manager 20 den entsprechenden Switch(-Manager) 22, 24 an den der betreffende Knoten angeschlossen ist, und fordert die Aktivierung des entsprechenden Ports an. Jeder aktive Switch-Manager 22 muss also über einen gültigen Pfad zum Netz-Manager 20 verfügen.

Wie in Fig. 1 dargestellt ist eine Möglichkeit, das Netzwerk 10 als Baum mit beliebig vielen Hierarchieebenen zu strukturieren. Die Wurzel des Baumes ist die zentrale Netzwerkeinrichtung 12 mit Netz-Manager 20 und Switch 24 an dem er angeschlossen ist. Die folgenden Ebenen bestehen aus Hosts (Endpunkte) 18 oder weiteren Switch-Einrichtungen 14 mit Switches 24 und in der Regel mit Hosts 18 als Schnittstellen zur jeweils nächsten Hierarchieebene. Der Port, über den ein Switch 24 an die nächsthöhere Hierarchieebene angeschlossen ist, wird im Folgenden Root-Port (analog zur Bezeichnung beim Spanning Tree Protocol) genannt. Wichtig ist, dass jeder aktive managebare Knoten mit Switch-Manager 22 eine gültige Verbindung zum Netz-Manager 20 benötigt.

Im Folgenden werden einige Grundprinzipien, auf denen das Power-Management-Konzept beruht, im Einzelnen beschrieben:
Die in Fig. 2 gezeigten, als Link Pulse bzw. NLPs ausgebildeten Netzwerkfunktionskontrollsignale 30 sind kurze Spannungsimpulse, die ein Teilnehmer im Ethernet auf seine Sendeleitung der Netzwerksegmente 26, 28 legt, während kein Sendeverkehr stattfindet. Sie dienen dazu, den Zustand des Links zu testen. Ein Teilnehmer erkennt einen Link-Fehler, wenn 50 ms - 150 ms keine Pulse 32 (und auch kein Datenverkehr) empfangen werden. Bei 10 BASE-T Ethernet werden diese Pulse 32 Link Integrity Test (LIT) Pulse genannt, bei 100 BASE-TX und Autonegotiation spricht man von Normal Link Pulses (NLP). Autonegotiation (100 BASE-TX) verwendet eine Sequenz von bis zu 33 solcher Pulse 32, wobei in dieser Sequenz die Kommunikationsparameter des Senders (Geschwindigkeit, Voll- oder Halbduplex) codiert werden. Diese Sequenzen heißen "Fast Link Pulse (FLP) bursts".

Die prinzipielle Form der NLPs ist in Fig. 2 dargestellt. Die genaue Spezifikation der Pulsform kann in IEEE 802.3 Clause 14.3.1 nachgelesen werden. Der Link Integrity Test selbst (also auch die zeitliche Abfolge der Pulse 32) ist in IEEE 802.3 Clause 14.2.1.7 (Seite 321) spezifiziert.

Die FLP-bursts die für Autonegotiation eingesetzt werden haben die gleiche Form, nur werden maximal 33 und minimal 17 solcher Pulse im Abstand von 125 µs gesendet. Die Bursts sind ebenfalls 16 ms +/- 8 ms voneinander entfernt.

Wird der PHY eines Ports aktiviert, sendet er solche Pulse aus. Je nach Konfiguration des Switches/Controllers (IOOSASE-TX) als FLP-bursts (Autonegotiation) oder als NLPs, wenn Autonegotiation deaktiviert ist.

Das Energy-Detect-Modul (EDM) ist ein System, welches in der Lage ist NLPs oder FLP-bursts zu erkennen, und deren Vorhandensein in geeigneter Form anzuzeigen. Es ist auf jedem Gerät pro Port notwendig, d. h., ein 4-Port-Switch muss vier EDMs oder ein EDM mit vier Ein- und Ausgängen haben. Das EDM muss mit der Rx-Leitung des Ports verbunden sein, darf aber den Empfang von Frames nicht beeinflussen.

Vorteilhafterweise sind alle IP-Adressen des Ethernet-Netzwerks statisch und dem Netz-Manager (bzw. der entsprechenden Software) bekannt. Das Konzept ist allerdings nicht darauf beschränkt. Die Möglichkeiten zur IP-Adressvergabe sind offen. Beispielsweise wäre eine dynamische Zuweisung mittels DHCP möglich. Die Art und Weise auf die der Netz-Manager die IP-Adressen der Hosts 18 lernt ist offen.

Weiterhin ist mit Vorteil vorgesehen, dass im Initialzustand des Netzwerksystems 10 das Netz-Managermodul 20 und der zugeordnete Switch 24 der zentralen Netzwerkeinrichtung 12 immer aktiv sind. Dies macht die aktive Rolle der zentralen Netzwerkeinrichtung 12 beim Verfahren zur Aktivierung der temporär inaktiven Netzwerk-Komponente eines Netzwerksystems noch einmal deutlich. Diese permanente Aktivität ist zwar nicht unbedingt vonnöten, da ein von "außen" aktiviertes Gerät beim Versuch eine Verbindung zum Netz-Manager 20 herzustellen diesen zwangsläufig aktivieren würde, aber in der Regel wird die Netz-Management-Software eine Art Grundzustand des Netzes 10 herstellen wollen, d. h. ausgewählte Steuergeräte aktivieren. Das Konzept ist auch hierauf nicht beschränkt.

Die Vorgänge, die im Netzwerksystem (Netz) 10 ablaufen, um Hosts 18 und Teilnetze zu aktivieren und zu deaktivieren, lassen sich zur einfacheren Beschreibung auf zwei Ebenen betrachten, nämlich der Hardware-Ebene und der Software-Ebene).

Auf der Hardware-Ebene wird festgelegt, auf welche Weise Hosts 18 und Switches 24 physikalisch einander aktivieren, deaktivieren und von einer externen Aktivierung/Deaktivierung benachrichtigt werden können.

Auf der Netzwerk-Ebene wird definiert, wie Shutdown- und Wake-Up-Vorgänge (Inaktivierungs- und Aktivierungsvorgänge) im Netz ablaufen, unter Verwendung der in der Hardware-Ebene festgelegten Mechanismen.

Während die Hardware-Ebene also definiert, wie zwei benachbarte Netzknoten (Hosts 18 und Switches 24) physikalisch miteinander interagieren legt die Netzwerkebene fest, nach welchem Prinzip ein Knoten im Netz einen beliebigen anderen Knoten über die Netz-Management-Software aktivieren kann, wie die Netz-Management-Software den Knoten aktiviert und wie sie einen Knoten deaktivieren kann.

Interaktionen auf der Hardware-Ebene:
Zwei benachbarte Knoten, beispielsweise ein Switch 24 und ein Host 18, müssen in der Lage sein, einander zu aktivieren, wenn es notwendig ist, einander über eine anderweitig erfolgte Aktivierung zu unterrichten oder auch einander zu deaktivieren, wenn es der Netz-Manager 20 fordert.

Der Switch-Manager 22 behandelt jeden Port seines Switches 24 als finite Zustandsmaschine (FSM) . Durch dieses Modell lässt sich ein Port auf einfache Weise steuern und überwachen. Ein Manager eines 4-Port-Switches verwaltet also gleichzeitig vier voneinander unabhängige FSMs. Zunächst soll hier das Modell kurz erklärt werden: Anschließend wird anhand der State-Machine erläutert, wie die einzelnen Mechanismen der Hardware-Ebene ablaufen.

Jeder Port hat vier normale Zustände:
- UP bedeutet, dass der PHY des jeweiligen Ports im aktivierten, normalen Zustand ist und ein gültiger Link besteht. Beide Seiten (Switch und Host) senden und empfangen NLPs und können bei Bedarf Frames übertragen.
- DOWN bezeichnet den deaktivierten Zustand des Ports. Der PHY ist im Power-Down-State, es werden keine NLPs gesendet, Daten können nicht übertragen werden.
- HOST STARTUP ist ein Übergangszustand, in dem der PHY aktiviert ist und NLPs auf die Sendeleitung legt. Der an dem Port angeschlossene Host ist noch nicht aktiv und sendet noch keine Link-Pulse. Es wird also seitens des Switches 24 noch kein gültiger Link erkannt.
- HOST SHUTDOWN ist ebenfalls ein Übergangszustand, diesmal für das Herunterfahren eines angeschlossenen Hosts 18. Der Port-PHY ist deaktiviert und sendet keine NLPs. Der Host 18 ist aber noch aktiv und sendet NLPs, die das EDM des Ports anzeigt.

Desweiteren existieren zwei Fehlerzustände:
- LINK FAIL zeigt an, dass eine vorher gültige Verbindung unvorhergesehen abgebrochen ist.
- ERROR ist ein globaler Fehlerzustand, in den bei Auftreten sonstiger Fehler übergegangen wird, wobei die Art oder Ursache des Fehlers gespeichert wird.

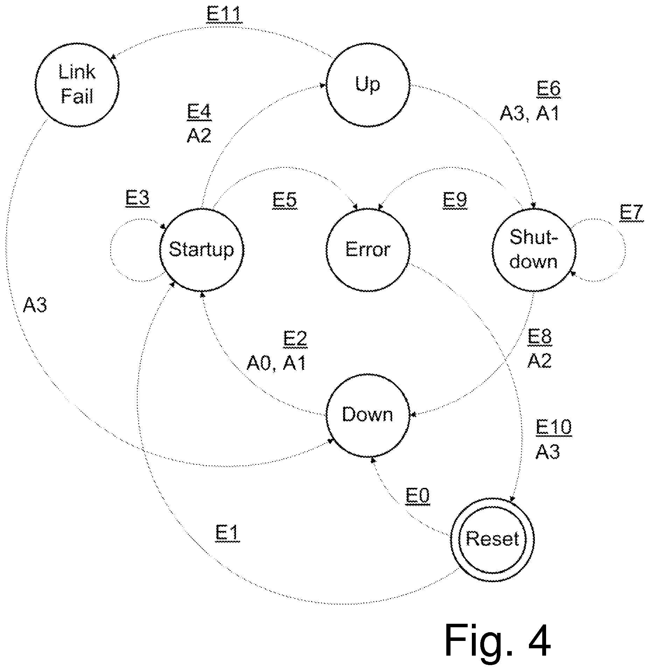

Aktivieren eines als Netzwerk-Komponente 16 ausgebildeten Hosts 18 mittels eines Switches:
Ein Switch 24 muss in der Lage sein, einen an ihn angeschlossenen, deaktivierten Host 18 auf Anforderung des Netz-Managers 20 hin zu aktivieren. Die in Fig. 4 gezeigte sogenannte "Port-State-Machine" erfüllt diese Anforderung.

Fordert der Netz-Manager 20 die Aktivierung des Hosts 18 an, führt das zu einem Zustandsübergang in den Zustand HOST STARTUP. Dabei wird der PHY des Ports aktiviert und beginnt mit dem Senden von NLPs. In diesem Zustand bleibt die State-Machine solange keine NLPs von Seiten des Hosts 18 empfangen werden.

Erkennt das EDM des Hosts 18, also die erste Aktivierungseinrichtung, die Link-Pulse 32 (NLPs) der Switch-Einrichtung 14, so löst es den Bootprozess des Hosts 18 in geeigneter Weise aus. Sobald der Ethernet-Controller des Hosts 18 gestartet wird, beginnt dessen PHY seinerseits mit dem Senden von Link-Pulsen 32. Diese werden von dem EDM des Switches, also der zweiten Aktivierungseinrichtung, erkannt und angezeigt. Dieses Ereignis führt zu einem Zustandswechsel der FSM in den UP-Zustand. Beide Seiten erkennen NLPs, der Link ist also gültig und die Verbindung hergestellt. Frames können jetzt übertragen werden.

Tritt ein Fehler beim Bootprozess des Hosts 18 auf, und es werden keine NLPs zurückgesendet, findet ein Timeout-Ereignis statt, die Finite Zustandsmaschine (FSM) wechselt in den globalen Fehlerzustand und zeigt einen STARTUP_TIMEQUT an.

Benachrichtigung der Switch-Einrichtung 14 über eine externe Aktivierung durch den Host 18:
Wird ein Host 18 nicht auf Initiative des Netz-Managers 20 hin aktiviert, sondern von außen, bspw. durch einen Nutzer (User), und ist dessen Switch 24 noch deaktiviert, muss der Host 18 seinen Switch darüber in Kenntnis setzen, damit dieser seinen Port-PHY aktiviert.

Die Finite Zustandsmaschine (FSM) ist im DOWN-State. Sobald der Netzwerk-Controller des Hosts 18 mit dem Senden von NLPs beginnt, werden diese durch das EDM des Switches erkannt und angezeigt. Dies führt zu einem Zustandswechsel von DQWN nach UP, wobei der PHY des Ports aktiviert wird und seinerseits NLPs sendet. Beide Seiten erkennen jetzt NLPs, der Link ist gültig und es können Frames übertragen werden.

Aktivierung der Switch-Einrichtung durch den Host 18:
Sobald der Netzwerk-Controller des Hosts 18 mit dem Senden von NLPs beginnt, werden diese durch das EDM des Switches erkannt. Das Gerät, welches den Switch-Manager 22 enthält, muss nun in geeigneter Weise gebootet werden. Der Switch-Manager 22 muss daraufhin den Switch 24 aktivieren und in den Grundzustand versetzen. Alle FSMs sind nach dem Bootvorgang im DOWN-Zustand.

Eine Switch-Einrichtung 14 aktiviert eine Switch-Einrichtung 14 der nächsttieferen Hierarchie-Ebene:
Soll ein Switch 24 der nächsttieferen Hierarchieebene aktiviert werden, wird dies durch denselben Mechanismus bewerkstelligt. Der hierarchisch höhere Switch bekommt vom Netz-Manager 20 die Aufforderung, den entsprechenden Port zu aktivieren. Für ihn macht es keinen Unterschied, ob an dem Port ein Host 18 oder ein Switch 24 angeschlossen ist. Die FSM wechselt in den HOSTSTARTUP-Zustand und der PHY wird aktiviert (es werden NLPs gesendet).

Das EDM des hierarchisch tieferen Switches 24 zeigt die NLPs an, und der Switch 24 wird hochgefahren und aktiviert sofort seinen Root-Port. Dies führt beim hierarchisch höheren Switch 24 zu einem Zustandswechsel von HOST-STARTUP zu UP, beide Seiten erkennen Linkpulse und die Verbindung ist hergestellt.

Eine Switch-Einrichtung 14 aktiviert eine Switch-Einrichtung 14 der nächsthöheren Hierarchie-Ebene:
Der Host 18 wird von außen aktiviert und aktiviert in Folge "seinen" Switch 24. Dieser muss seinerseits, um eine Verbindung zum Netz-Manager 20 herzustellen, den hierarchisch nächsthöheren Switch 24 aktivieren. Dazu muss der Switch-Manager 22 wissen, über welchen Port er an die nächsthöhere Hierarchieebene angebunden ist (er muss seinen Root-Port kennen). Beispielsweise ist eine Portnummer definiert, die global für alle Switches 24 als Anschluss an die nächste Hierarchieebene gilt (bspw. Port 1) . Eine andere Möglichkeit wäre ein Speichereintrag, der für jeden Switch individuell festgelegt wird.

Gemäß dem State-Diagramm wechselt die FSM des Root-Ports nach dem Boot sofort in den Zustand HOST-STARTIJP. Damit wird der übergeordnete Switch durch die über den Root-Port gesendeten NLPs geweckt.

Deaktivieren des Hosts 18 durch die Switch-Einrichtung 14 /den Switch 24:
Bekommt eine Switch-Einrichtung 14 die Aufforderung vom Netz-Manager 20, einen Host (Port) 18 zu deaktivieren, kann auch dieses durch die Port-State-Machine erreicht werden.

Die Aufforderung der Netz-Managers 20 hat zur Folge, dass die FSM des Ports vom Zustand UP in den Zustand HOST-SHUTDOWN übergeht, wobei der PHY des Ports deaktiviert wird (es werden keine NLPs mehr gesendet) . In diesem Zustand verbleibt die FSM solange, bis keine NLPs mehr von Seiten des Hosts 18 ankommen.

Der Netzwerkcontroller des Hosts wird einen "link fail" melden, sobald er keine NLPs mehr vom Switch erhält. Dieses Ereignis kann als Trigger für den Shutdown-Prozess des Hosts verwendet werden. Es könnte aber alternativ auch der Ausgang des Host-EDM verwendet werden, da dieser keine Link-Aktivität mehr anzeigen wird. Die genaue Vorgehensweise bleibt offen.

Fährt der Host herunter, wird er selbst mit dem senden von NLPs aufhören. Dies führt bei der Port-FSM des Switches zu einem Zustandswechsel von HOST-SHUTDOWN zu DOWN. Das Interface ist damit deaktiviert, der Host heruntergefahren und die Anforderung erfüllt.

Geht beim Herunterfahren des Hosts etwas schief, und es werden weiter NLPs von ihm gesendet, geht die Zustandsmaschine des Switches nach einer definierten Zeit in den ERROR-State über und hinterlegt einen Shutdown-Timeout als Fehler.

Deaktivieren eines Switches durch einen Switch:
Soll ein Switch einen hierarchisch tieferen Switch deaktivieren, so läuft der Mechanismus ähnlich dem Deaktivieren eines Hosts durch einen Switch ab. Den Fall, dass ein Switch einen hierarchisch höheren Switch deaktiviert, gibt es nicht, da er damit seine eigene Verbindung zum Netzwerk-Manager 20 kappen würde, was per Definition ausgeschlossen ist.

Für den Switch macht es keinen Unterschied, ob an dem zu deaktivierenden Port ein Host 18 oder ein Switch 24 angeschlossen ist. Der zu deaktivierende, hierarchisch tiefere Switch(-Manager) weiß, über welchen Port er an die nächsthöhere Hierarchieebene angeschlossen ist. Empfängt er von diesem Port keine NLPs mehr, ist das für ihn der Auslöser den Shutdown einzuleiten. Per Definition (siehe Kapitel 9.3) hat der Netz-Manager 20 bereits alle Ports des zu deaktivierenden Switches 24 abgeschaltet, bevor er den Switch 24 selber herunterfährt.

Zunächst wechselt die Port-FSM in den LINK-FAIL-State, da keine NLPs mehr empfangen werden. Von da führt der nächste Zustandswechsel in den DOWN-State, das Interface ist jetzt deaktiviert. Jetzt kann der Switch-Manager den Shutdown-Vorgang des Switches einleiten und sich anschließend selbst herunterfahren.

Interaktionen auf der Netzwerk-Ebene - Kommunikation zwischen Netz-Manager 20 und Switch-Manager:
Wie bereits angesprochen, ist der Netz-Manager dafür zuständig, die Switch-Manager dazu aufzufordern, ihre Ports zu aktivieren oder zu deaktivieren. Da der Netz-Manager zu jedem Zeitpunkt die Topologie des Netzes und den Zustand der Knoten kennt, kann er somit jede gewünschte Konfiguration herstellen, indem er einzelne Hosts oder ganze Teilnetze aktivieren oder deaktivieren lässt. Dies setzt voraus, dass jeder aktive Switch-Manager eine gültige Verbindung zum Netz-Manager (Wurzel des Baumes) besitzt. Ist der Endpunkt eines Astes aktiv, muss also der gesamte Ast aktiv sein.

Die Art und Weise der Kommunikation zwischen dem Netz-Manager und den Switch-Managern ist nicht festgelegt. Die Anforderung ist, dass der Netz-Manager dem Switch-Manager seine Absicht und den Port, um den es sich handelt, mitteilen kann, und dass der Switch-Manager 22 dem Netz-Manager 20 Benachrichtigungen übermitteln kann, wenn einer seiner angeschlossenen Knoten aktiviert wurde. So kann der Netz-Manager 20 seine Zustandstabelle aktualisieren.

Hierfür eignet sich beispielsweise das Simple Network Management Protocol (SNMP) gut. Es bietet sich die Interface Management-Information-Base (IF-MIB) an, die unter anderem das Managed Object mit der Object-ID (OID) *ifAdminStatus* beinhaltet. Dieses Objekt gibt den gewünschten Zustand eines Interfaces (Ports) an. Verfügt der Netz-Manager über einen SNMP-Controller-Prozess und die Switch-Manager jeweils über einen SNMP-Agenten, kann der Netz-Manager 20 ein SNMP SET-Paket an den Switch-Manager 22 senden und das Objekt *ifAdminStatus* auf den gewünschten Wert setzen. Die Benachrichtigung wenn ein Knoten aktiviert wurde, kann über ein vom Agenten gesendetes SNMP TRAP-Paket durchgeführt werden. Als Reaktion auf den TRAP müsste der Switch-Manager 22 ein SNMP-GET-Paket zurücksenden und die Werte des Objekts *ifAdminStatus* für jeden Port auslesen und entsprechend seine Zustandstabelle updaten. Da SNMP noch eine Vielzahl weiterer Management-Möglichkeiten bietet, kann diese Basis auch als Plattform für weiteres Netzwerkmanagement verwendet werden.

Eine weniger umfangreiche, schlankere Methode könnte sein, eigene Wake-Up, Shutdown- und Benachrichtigungs-Frames zu definieren, die die betreffende Porinummer enthalten. Der Nachteil der Methode besteht darin, dass sie nicht standardisiert ist und keine bestehende Plattform für weitere Management-Funktionen bietet.

### Host-Requests:

In den meisten Fällen benötigt ein aktiver Host einen "Gesprächspartner", mit dem er Daten austauschen kann. In der Regel kennt der Netz-Manager die bestehenden Abhängigkeiten zwischen verschiedenen Hosts und aktiviert selber alle notwendigen Netzknoten in der passenden Reihenfolge.

Es besteht aber auch die Möglichkeit, dass ein Host kurzfristig einen anderen Host benötigt, der aber gerade inaktiv ist, Das Prinzip des zentralisierten Managements sieht nicht vor, dass ein Host einen anderen selbstständig weckt. Der Host muss die Aktivierung des Anderen beim Netz-Manager anfordern. Der Netz-Manager kann dann entscheiden, ob er den angeforderten Host weckt (hier könnten Berechtigungen eine Rolle spielen) und ggf. den Wake-Up durchführen. Sobald vom "Ziel-Switch" die Benachrichtigung eintrifft, dass der angeforderte Host aktiviert wurde, kann der Netz-Manager dem Host, von dem die Anforderung ausging, eine Bestätigung übermitteln.

### Behandlung kaskadierter Switches:

Es wurde bereits dargestellt, dass jeder Switch-Manager einen Pfad zum Netz-Manager besitzen muss, also keine "Lücken" in den Ästen des Baumes sein können.

Aktivierung eines Knotens über einen bereits aktiven Switch 24: Soll ein Knoten aktiviert werden, der an einem bereits erreichbaren Switch 24 angeschlossen ist, ist der Fall trivial. Der Netz-Manager 20 fordert den Switch 24 dazu auf, den entsprechenden Port zu aktivieren.

Aktivierung eines Astes durch den Netz-Manager 20: Komplizierter wird die Situation, wenn sich der zu aktivierende Knoten an einem noch inaktiven Switch bzw. am Ende eines Astes inaktiver Switches befindet. Der Netz-Manager 20 kennt die Topologie und muss nun jeden Switch 24 auf dem Weg zum Zielknoten sequentiell wecken, bis er den Ziel-Switch erreichen kann und damit den gewünschten Knoten aktivieren kann. Damit wird der gesamte Ast bis zum Zielknoten aktiviert.

Deaktivierung eines Astes durch den Netz-Manager 20:
Analog läuft die Deaktivierung eines Astes ab. Der Netz-Manager 20 kennt die Topologie und deaktiviert sequentiell alle Knoten, die sich unterhalb des eigentlich abzuschaltenden Switches 24 befinden.

Die Fig. 3 illustriert die Aktivierung eines Astes 34 durch einen User:
Wird ein Host 18, der Teil eines inaktiven Astes 34 ist, von außen aktiviert, tritt zunächst "Host aktiviert Switch" Fall ein. Betrachtet man erneut die Port-State-Machine des Switches 24, wird die rekursive Fortpflanzung des Wake-Ups durch den gesamten Ast 34 klar:
   - Der erste Switch 24-A versucht eine Verbindung zum (noch nicht erreichbaren) Netz-Manager 20 aufzubauen und aktiviert zunächst seinen Root-Port. Die Root-Port FSM bleibt aber solange im Zustand HOST-STARTUP, bis vom nächst höheren Switch 24-B NLPs empfangen werden.
   - Der nächsthöhere Switch 24-B wird booten und wird als erstes wiederum seinen Root-Port aktivieren, um die Verbindung zum Netz-Manager 20 herzustellen. Er bleibt aber solange im Zustand HOST-STARTUP, bis er von seinem Root-Port, also von Switch 24-C, NLPs empfängt. Dieses Muster setzt sich rekursiv bis hinauf zum ersten bereits aktiven Switch 24-Z fort. War der gesamte Ast 34 inaktiv, wäre dies der höchste Switch 24, an dem der Netz-Manager 20 selbst angeschlossen ist.
   - Der erste bereits vorher aktive Switch 24-Z verfügt bereits über eine Verbindung zum Netz-Manager 20 und wird sofort auf die NLPs des nächsttieferen Switches 24-Y antworten. Gleichzeitig wird er den Netz-Manager 20 über die Aktivierung des entsprechenden Ports informieren.
   - Da jetzt der nächsttiefere Switch 24-Y NLPs empfängt, wechselt die FSM seines Root Ports von HOST-STARTUP in den UP-Zustand, und es besteht eine Verbindung zum nächsthöheren Switch 24-Z und damit zum Netz-Manager 20. Jetzt kann Switch 24-Y dem wiederum nächsttieferen Switch 24-X antworten (die FSM des Ports geht von HOST STARTUP zu UP über, und es werden NLPs gesendet). Gleichzeitig informiert Switch 24-Y den Netz-Manager 20 über die Aktivierung von Switch 24-X.
   - Dieses Muster setzt sich bis zum Ende des Astes A fort, so dass die Benachrichtigungen in der Reihenfolge "von oben nach unten" an den Netz-Manager gesendet werden (die Wake-Ups propagierten hingegen 'von unten nach oben" durch den Ast). Dies ist auch notwendig, da ein Switch den Netz-Manager erst dann benachrichtigen kann, wenn er eine Verbindung zu ihm hat.

Die entsprechende Port-Zustandsmaschine (Port-State-Machine) wird in Fig. 4 veranschaulicht.

Ausgehend von einem Zustand "Reset" (bzw. "Boot") ergeben sich zunächst die alternativen Ereignisse, dass der Port kein Root-Port ist (E0), was zu einem Zustand "Down" des Ports führt, oder dass der Port Root-Port ist (E1), was zu einem Zustand "Startup" führt.

Vom Zustand "Down" kann jedoch durch eine "Wake-Up"-Anforderung (E2) durch den Netz-Manager 20 mittels der Aktionen PHY aktivieren (A0) und Timer zurücksetzen (A1) ebenfalls der Zustand "Startup" erreicht werden. Bei fehlender Aktivität des Hosts 18 und laufendem Timer (E3) bleibt der Port im Zustand "Startup".

Ausgehend vom Zustand "Startup" wird durch eine Hostaktivität (E4), bei der der Netzmanager 20 aktiviert wird (A2), der Zustand "Up" erreicht. Alternativ wird bei fehlender Hostaktivität und einem Timeout (E5) aus dem "Startup" lediglich ein "Error"-Zustand erreicht.

Aus dem Zustand "Up" wird durch eine "Shutdown"-Anforderung (E6) durch den Netzmanager 20 der Zustand "Shutdown" erreicht, wobei PHY deaktivert wird (A3) und der Timer zurückgesetzt wird (A1).

Ist der Host 18 anschließend noch aktiv und der Timer läuft (E7), so verbleibt der Port im Zustand "Shut-down". Gibt es keine Host-Aktivität mehr (E8), so wird der Netzmanager 20 benachrichtigt und der Zustand "Down" erreicht. Kommt es hingegen zu einem Timeout während der Host 18 noch aktiv ist, (E9) so kommt es zum Zustand "Error".

Vom Zustand "Error" aus wird durch einen Reset (E10), bei dem PHY deaktivert wird (A3), der gleichnamige Zustand "Reset" (wieder) erreicht.

Vom Zustand "Up" aus wird alternativ zur "Shutdown"-Anforderung (E6) durch eine fehlende Link-Aktivität (E11) ein Zustand "Link Fail" erreicht, worauf die Aktion PHY deaktivieren folgt (A3) und der Zustand "Down" erreicht wird.

Somit ist die in Fig. 4 gezeigte Port-Zustandsmaschine vollständig beschrieben.

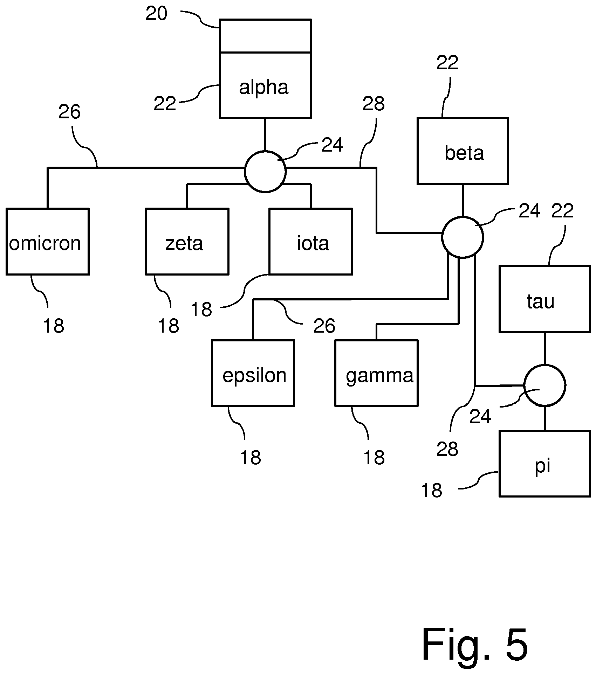

Im Folgenden wird das beschriebene Konzept durch ausgewählte Beispielfälle anhand der Figur 5 veranschaulicht:
Bei dem Netz handelt es sich um ein switched Ethernet, welches aus drei Switches 24-S1, 24-S2, 24-S3 besteht, an denen mehrere Hosts 18 angeschlossen sind (siehe Fig. 5). Die Switch-Manager 22 sind Switch-Manager 22-alpha, Switch-Manager 22-beta und Switch-Manager 22-tau. Manche Hosts 18 können von außen (z. B. durch einen Nutzer/User oder ein Ereignis/Event) aktiviert und deaktiviert werden und werden im Folgenden als "weckbar" bezeichnet. Andere Hosts 18 wiederum können nur netzintern geweckt und deaktiviert werden, d. h. auf Initiative eines Switches 24 bzw. eines anderen Hosts 18 hin (nicht weckbar).

Switch 24-S1 kommt eine besondere Rolle zu. Er bildet die Wurzel des Topologie-Baumes, und sein Switch-Manager 22-alpha ist zugleich der zentrale Netz-Manager 20.

Zur Kommunikation zwischen Netz-Manager 20 und den verschiedenen Switch-Managern 22 wird in den Beispielfällen SNMP eingesetzt. Der Netz-Manager 20 verfügt über einen SNMP-Client zum Senden von SNMP-Paketen, die Switch-Manager besitzen einen SNMP-Agenten.

### Aktivierung von Host 18-omicron:

Dieses Beispiel demonstriert die Aktivierung einzelner Hosts 18 im Netz durch den Netz-Manager 20. In der Ausgangssituation ist das gesamte Netz-System 10 bis auf den als zentrale Netzwerkeinrichtung 12 ausgebildeten Host 18-S1/alpha deaktiviert. Der Netz-Manager 20 dieser zentralen Netzwerkeinrichtung 12 möchte jetzt einen Zustand herstellen, in dem die Hosts 18-omicron und 18-epsilon aktiv sind.

Zunächst wird Host 18-omicron aktiviert. Er ist direkt an den Root-Switch S1 angeschlossen (Port S1-1). Der Netz-Manager 20 greift auf den SNMP-Client von Host 18-alpha zu und sendet ein SNMP-SET-Paket an den SNMP-Agenten von Host 18-alpha. Infolgedessen wird das Objekt *ifAdminStatus* für Port 81-1 auf TRUE gesetzt. Der SNMP-Agent informiert den Switch-Manager von Switch 24-S1 darüber.

Dieses Ereignis führt zu einem Zustandswechsel der State-Machine des Ports von DOWN nach HOST-STARTUP und damit zur Aktivierung des PHYs von Port S1-1, woraufhin NLPs ausgesendet werden. Das EDM von Host 18-omicron (einer Netzwerk-Komponente 16) erkennt diese NLPs und löst daraufhin den Boot-Vorgang von Host 18-omicron aus. Sobald der Netzwerk-Controller von Host 18-omicron seinerseits aktiv ist und NLPs sendet, erkennt das EDM des Switches 24-S1 dies, und es findet ein Zustandswechsel HOST-STARTUP nach UP statt. Dabei wird der Netz-Manager darüber informiert, dass der an Port S1-1 angeschlossene Knoten aktiviert wurde.

Aktivierung von Host 18-epsilon (ebenfalls einer Netzwerk-Komponente 16):
Als nächstes soll noch Host 18-epsilon aktiviert werden. Der Netz-Manager 20 weiß, dass er Host 18-epsilon über Switch 24-S2 und damit über seinen Port S1-4 erreichen kann. Ebenfalls weiß er, dass Switch 24-S2 und dessen Switch-Manager 22-beta noch inaktiv sind und somit zuerst aktiviert werden müssen. Zunächst wird wieder ein SNMP-SET-Paket an den SNMP-Client von Host 18-alpha (hier die zentrale Netzwerkeinrichtung 12) gesendet, um Port S1-4 einzuschalten. Gemäß "Switch aktiviert Switch der nächsttieferen Hierarchieebene" erkennt das EDM von Switch 24-S2 die NLPs, der Switch 24 samt Switch-Manager 22 wird hochgefahren und der Root-Port von Switch 24-S2 wird aktiviert. Jetzt sind Switch 24-S2 und Switch-Manager 22-beta aktiv, und es besteht eine gültige Verbindung. Der Netz-Manager 20 wird zudem noch benachrichtigt, dass der an Port S1-4 angeschlossene Knoten (also S2/beta) aktiviert wurde.

Um jetzt noch Host 18-epsilon zu aktivieren wird exakt wie im vorherigen Fall bei der Aktivierung von Host 18-omicron verfahren. Der einzige Unterschied ist, dass sich SNMP-Client und -Agent jetzt nicht mehr auf demselben Gerät befinden, sondern das SNMP-SET-Paket an Switch-Manager 22-beta gesendet wird.

Aktivierung von Host 18-pi durch den Nutzer (user):
Das gesamte Netzwerksystem 10 bis auf Switch 24-S1 und Switch-Manager 22-alpha (der gleichzeitig Netz-Manager 20 ist) sei wieder vollständig deaktiviert. Host 18-pi wird von außen (durch einen Nutzer oder ein Ereignis) aktiviert. Die Kaskade besteht aus drei Switches, 24-S3, 24-S2 und 24-S1.

Host 18-pi weckt zuerst Switch 24-S3 und Switch-Manager 22-tau und wartet auf NLPs von Switch 24-S3. Als erste Aktion wird Switch-Manager 22-tau den Root-Port von S3 aktivieren (Port S3-1) und auf NLPs von Switch 24-S2 warten.

Analog dazu wird Switch-Einrichtung 14-S2/beta aufwachen, und der Switch-Manager 22-beta wird wiederum den Root-Port von Switch 24-S2, also S2-1, aktivieren. Switch 24-S1, der schon wach ist, schaltet daraufhin den PHY von Port S1-4 ein.

Switch-Einrichtung 14-S2/beta erkennt die NLPs von Switch 24-S1. Die Root-Port-FSM wechselt in den Zustand UP und der Switch-Manager 22 beginnt jetzt mit der Bearbeitung der von Port S2-4 eintreffenden NLPs. Die FSM dieses Ports wechselt in den Zustand UP, der PHY wird aktiviert, und es werden NLPs zurückgesendet. Zudem wird der Netz-Manager 20 darüber informiert, dass der an S2-4 angeschlossene Knoten aktiviert wurde.

Derselbe Prozess findet jetzt eine Ebene tiefer mit Switch-Einrichtung 14-S3/tau und Port S3-2 statt. Sobald dann die NLPs von Host 18-pi beantwortet wurden, wird der Netz-Manager 20 informiert, dass der an Port S3-2 angeschlossene Knoten aktiviert wurde.

Der Wake-Up ist von unten nach oben durch die Kaskade gelaufen, die Benachrichtigungen an den Netz-Manager 20 hingegen von oben nach unten.

### Deaktivierung des gesamten Astes 34:

Jetzt entscheidet der Netz-Manager 20, dass der soeben aktivierte Ast 34(also Switch 24-S2, 24-S3, Host 18-pi) wieder deaktiviert werden soll. Dies geschieht von unten nach oben: der Netz-Manager 20 wird sequentiell Host 18-pi, Switch-Einrichtung 14-S3/tau und Switch-Einrichtung 14-S2/beta deaktivieren. Wäre beispielsweise noch Host 18-epsilon aktiv, würde der Netz-Manager 20 diesen auch deaktivieren, bevor er Switch-Einrichtung 14-S2/beta herunterfährt.

Zunächst wird Host 18-pi deaktiviert, indem ein SNMP-SET-Paket an den Switch-Manager 22-tau gesendet wird, wobei das Objekt *ifAdminStatus* für Port S3-2 auf FALSE gesetzt wird. Die FSM des Ports wechselt in den Zustand HOST-SHUTDOWN, deaktiviert den PHY und wartet in diesem Zustand, bis auch von Host 18-pi keine NLPs mehr gesendet werden. Danach wechselt der Zustand nach DOWN, und der Netz-Manager 20 wird darüber informiert, dass der Knoten an Port 53- 2 deaktiviert wurde.

Danach sendet Host 18-alpha ein weiteres SNMP-SET Paket an Host 18-beta, um analog Port S2-4 zu deaktivieren. Dadurch wird die Switch-Einrichtung 14-S3/tau heruntergefahren.

Zuletzt sendet Host 18-alpha ein SNMP-Paket an sich selbst, um Port S1-4 zu deaktivieren. Jetzt wird Switch-Einrichtung 14-S2/beta ebenfalls heruntergefahren, und der gesamte Ast 34 ist deaktiviert.

Die Fig. 6 zeigt einen schematischen Aufbau eines einfachen Netzwerksystems 10 beziehungsweise eines Teils eines Netzwerksystems 10 gemäß einer weiteren Ausführungsform. Dieser Teil umfasst den Netz-Manager (Netzwerk-Manager) 20 und eine Anordnung aus Switch-Einrichtung 14, Netzwerk-Komponenten 16 sowie der diese verbindenden Signalleitungen 36 der entsprechenden Netzwerk-Segmente 26. Die als Steuergeräte des entsprechenden Kraftfahrzeugs ausgebildeten Netzwerk-Komponenten 16 (16-1, 16-2) weisen als Energy-Detect-Module ausgebildete erste Aktivierungseinrichtungen 38 auf. Die Switch-Einrichtung 14 weist den Switch-Manager 22, den Switch 24, eine Spannungsversorgung 40 und die als Energy-Detect-Modul ausgebildete zweite Aktivierungseinrichtung 42 auf. Der Switch-Manager 22 ist zur Steuerung von Switch 24 und Spannungsversorgung 40 mit jeder dieser Komponenten signaltechnisch verbunden. Mittels entsprechendem Multiplex-Verfahren werden die Signale und die Versorgungsleistung zusammengefasst (gebündelt), der zweiten Aktivierungseinrichtung 42 zugeführt und von dort simultan über die Signalleitung(en) 36 übertragen.

Die Netzwerk-Komponente(n) 16 oder zumindest die ihr zugeordnete(n) erste Aktivierungseinrichtung(en) 38 ist/sind dabei vom zentralen Netzmanager 20 mittels der Switch-Einrichtung 14 über die mindestens eine Signalleitung 36 des Netzwerk-Segments 26 mit elektrischer Energie versorgbar. Dazu weist die Switch-Einrichtung 14 die Spannungsversorgung 40 auf.

Die Anordnung aus versorgender Switch-Einrichtung 14, versorgter Netzwerk-Komponente 16, erster und zweiter Aktivierungseinrichtung 38, 42 sowie der diese verbindenden Signalleitung 36 ermöglicht mittels Multiplex-Verfahren eine Energieversorgung simultan zur wechselseitigen Signalübertragung zwischen der ersten und der zweiten Aktivierungseinrichtung 38, 42 über die Signalleitung 36.

Die als Steuergeräte ausgebildeten Netzwerk-Komponenten 16 besitzen keine eigene Spannungsversorgung, sondern werden über die als Ethernet-Leitung ausgebildete Signalleitung 36 durch die Spannungsversorgungseinheit 40 versorgt. Die Netzwerk-Komponenten 16 sind abgeschaltet ("Zero Power "). Im ersten Schritt kontaktiert der Netzwerkmanager 20 den Switch-Manager 22 der Switch-Einrichtung 14 und aktiviert die über das Ethernet eingekoppelte Spannungsversorgung 40 für die Netzwerk-Komponenten 16-1 und 16-2. Netzwerk-Komponenten 16-1, 16-2 werden jetzt versorgt, sind aber weiterhin in einem Ruhezustand ("Low Power "). Netzwerk-Komponente 16-3 wird nicht mit Spannung versorgt ("Zero Power ").

### Es ergeben sich folgende Aktivierungs-Szenarien:

Aktivierung der Netzwerk-Komponente 16-1 durch den Netz(werk)-manager 20:
Der Netzmanager 20 aktiviert die Netzwerk-Komponente 16-1, indem er den Switch-Manager 22 der Switch-Einrichtung 14 kontaktiert und den Port, an dem die Netzwerk-Komponente 16-1 angeschlossen ist, einschalten lässt. Die Netzwerk-Komponente 16-1 ist mit ihrer ersten Aktivierungseinrichtung 38 ausgestattet und wird durch die Aktivität auf der entsprechenden Leitung 36 geweckt. Der weitere Ablauf ist dann wie zuvor beschrieben.

Aktivierung der Netzwerk-Komponente 16-2 durch einen Benutzer: Die Netzwerk-Komponente 16-2 wird durch einen Benutzer (z. B. mittels Tastendruck) aktiviert. Dies ist möglich, da die Komponente 16-2 bereits durch die Spannungsversorgung 40 über die Signalleitung 36 versorgt wird. Hierbei ist zu beachten, dass nur die Spannungsversorgung 40 und die zweite Aktivierungseinrichtung 42 aktiviert sein müssen. Der Switch 24 (Ethernet-Switch) könnte erst infolgedessen aktiviert werden. Der prinzipielle Ablauf ist dabei wie zuvor beschrieben. Die Switch-Einrichtung 14 kann durch die zweite Aktivierungseinrichtung 42 die Link-Aktivität erkennen und ihren entsprechenden Port aktivieren. Damit ist die Kommunikationsverbindung aufgebaut.

Aktivierung der Netzwerk-Komponente 16-3 durch den Netzmanager 20. Der Netzmanager 20 kommuniziert mit dem Switch-Manager 22 der Switch-Einrichtung 14 und veranlasst die Aktivierung der Netzwerk-Komponente 16-3. Der Switch-Manager 22 aktiviert daraufhin die Einkopplung der Versorgungsspannung auf eine Leitung des entsprechenden Netzwerk-Segments 26 an der Spannungsversorgung 40. Die Netzwerk-Komponente 16-3 wird sofort aktiviert, sobald sie mit Spannung versorgt wird. Mit anderen Worten ist für diesen Fall diese Netzwerkkomponente 16-3 gleich ihrer ersten Aktivierungseinrichtung 38, und das Netzwerkfunktions-Kontrollsignal 30 wird durch die Aufnahme der Energieversorgung über die Signalleitung 36 gebildet. In diesem Fall benötigt die Netzwerkkomponente 16-3 keine als Energy-Dectect-Modul ausgebildete Aktivierungseinrichtung.

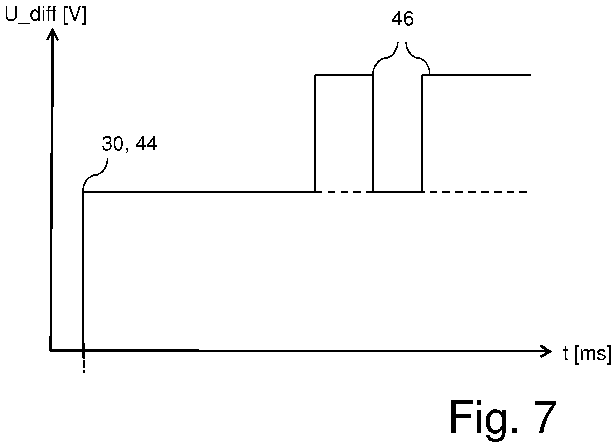

Die Fig. 7 zeigt schließlich ein entsprechendes, durch Aufnahme der Energieversorgung ausgebildetes Netzwerkfunktions-Kontrollsignal 30, nämlich die ansteigende Flanke 44, und der Energieversorgung aufmodulierte Datenübertragungssignale 46.

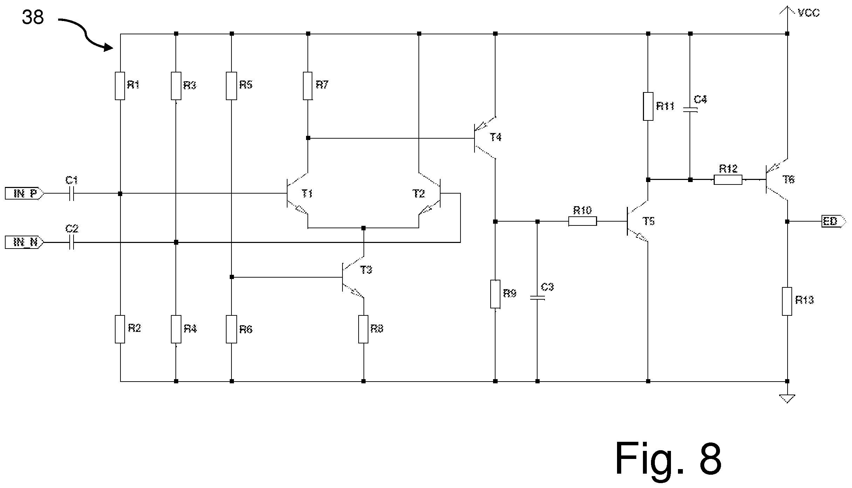

Die Figuren 8 - 10 zeigen drei beispielhafte Ausführungsformen der Aktivierungseinrichtung 38. Auch andere Realisierungen sind jedoch möglich.

Das erste Schaltungskonzept (Schaltplan in Fig. 8) ist in der Lage, Spannungspulse auf einer Signalleitung 36, die signaltechnisch mit den Eingängen IN_P und IN_N (siehe Fig. 8) verbunden ist, zu detektieren und mittels des elektrischen Ausganges ED (siehe Fig. 8) die zugehörige Netzwerkkomponente 16 zu aktivieren. Die erste Aktivierungseinrichtung 38 weist in dieser beispielhaften Ausführung einen geringen Ruhestrombedarf auf.

Diese beispielhafte Realisierung der Aktivierungseinrichtung 38 besteht aus einem Differenzverstärker, gebildet aus den Bauteilen T1 -T4, R1 - R9, der das differentielle Signal der Signalleitung 36 vorverstärkt und in ein massebezogenes Signal umsetzt. Darauf folgen mehrere Verstärkerstufen (in der Beispielschaltung zwei Stufen, bestehend aus den Bauteilen T5-T6, R10-R13, C3-C4), welche das massebezogene Signal weiter verstärken und dabei die Pulsbreite erhöhen. Der damit erhaltene konstante Ausgangspegel bei einem periodischen Auftreten von Eingangspulsen dient der Aktivierung der zugehörigen Netzwerkkomponente 16.

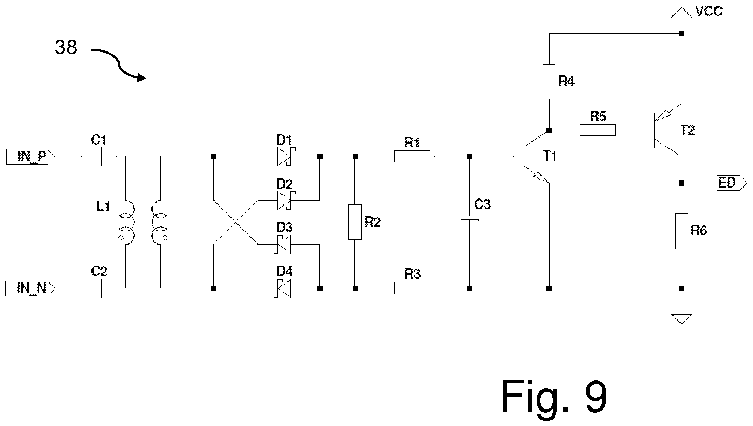

Das zweite Schaltungskonzept (Schaltplan in Fig. 9) ist in der Lage, Kommunikationssignale auf der Signalleitung 36, die signaltechnisch mit den Eingängen IN_P und IN_N (siehe Fig. 9) verbunden ist, zu detektieren und mittels des elektrischen Ausganges ED (siehe Fig. 9) die zugehörige Netzwerk-Komponente 16 zu aktivieren. Die erste Aktivierungseinrichtung 38 weist in dieser beispielhaften Ausführung außer Driftströmen keinen Ruhestrombedarf auf.

Diese beispielhafte Realisierung der Aktivierungseinrichtung 38 besteht aus einem Übertrager (L1), um das differentielle Eingangssignal in ein massebezogenes Signal umzusetzen. Der darauf folgende Brückengleichrichter (D1-D4) in Verbindung mit dem nachgeschalteten Filter (R1-R3, C3) liefert bei Kommunikationsaktivität einen konstanten Pegel an Transistor T1. Dieser Pegel wird durch eine Verstärkerschaltung (in der Beispielschaltung bestehend aus T1-T2, R4-R6) verstärkt und dazu genutzt, die zugehörige Netzwerkkomponente 16 zu aktivieren.

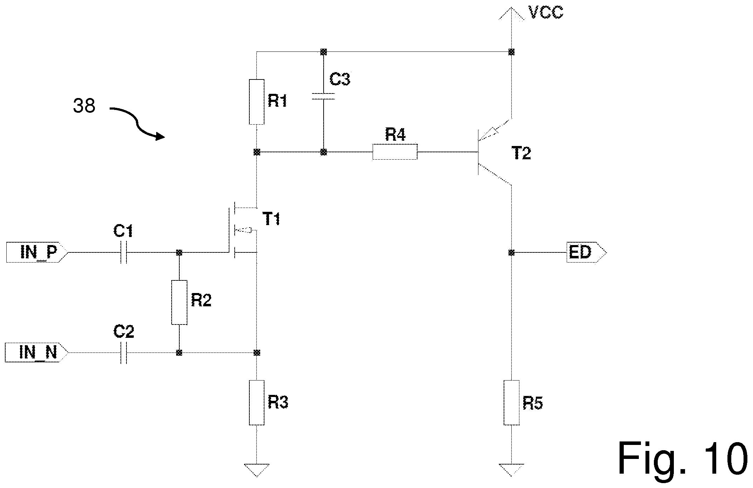

Das dritte Schaltungskonzept (Schaltplan in Fig. 10) ist in der Lage, Kommunikationssignale auf der Signalleitung 36, die signaltechnisch mit den Eingängen IN_P und IN_N (siehe Fig. 10) verbunden ist, zu detektieren und mittels des elektrischen Ausganges ED (siehe Fig. 10) die zugehörige Netzwerkkomponente 16 zu aktivieren. Die erste Aktivierungseinreichung 38 weist in dieser beispielhaften Ausführung außer Driftströmen keinen Ruhestrombedarf auf und kann mit sehr wenigen Komponenten realisiert werden.

Diese beispielhafte Realisierung der Aktivierungseinrichtung 38 besteht aus einem MOSFET T1, der über eine geringe Schwellenspannung verfügt. Durch Kommunikationsaktivität auf den Signalleitungen 36 wird dieser MOSFET leitend, wobei der resultierende Stromfluss einen Spannungsabfall an Widerstand R1 hervorruft. Diese Spannung wird durch eine nachgeschaltete Verstärkerstufe (in der Beispielschaltung bestehend aus T2, R4-R5, C3) verstärkt und dazu genutzt, die zugehörige Netz-werk-Komponente 16 zu aktivieren. Die Widerstände R2 und R3 sind sehr hochohmig, um eine Entkopplung der Signalleitungen 36 gegenüber der Versorgungsspannung und Masse zu gewährleisten.

## Patentansprüche

1. Verfahren zur Aktivierung einer temporär inaktiven Netzwerk-Komponente (16) eines Netzwerksystems (10) für ein Kraftfahrzeug, wobei eine zentrale Netzwerkeinrichtung (12) des Netzwerksystems (10) über einen Pfad innerhalb des Netzwerksystems (10) mit der Netzwerk-Komponente (16) signaltechnisch verbunden ist, der zumindest teilweise über ein Netzwerk-Segment (26) des Netzwerksystems (10) führt, wobei das Netzwerk-Segment (26) die Netzwerk-Komponente (16) und eine ihr zugeordnete erste Aktivierungseinrichtung (38) unverzweigt mit einer im Pfad angeordneten Switch-Einrichtung (14) und einer ihr zugeordneten zweiten Aktivierungseinrichtung (42) signaltechnisch verbindet und wobei die zentrale Netzwerkeinrichtung (12) die erste Aktivierungseinrichtung (38) mittels der Switch-Einrichtung (14) durch Senden eines Netzwerkfunktions-Kontrollsignals (30) anspricht, **dadurch gekennzeichnet, dass** die zentrale Netzwerkeinrichtung (12) während der Aktivierung die Netzwerk-Komponente (16) oder die erste Aktivierungseinrichtung (38) mittels der Switch-Einrichtung (14) über mindestens eine Signalleitung (36) des Netzwerk-Segments (26) zusätzlich mit elektrischer Energie versorgt, und dass die Energieversorgung simultan zur wechselseitigen Signalübertragung zwischen der ersten und der zweiten Aktivierungseinrichtung (38, 42) über die Signalleitung (36) erfolgt.

2. Verfahren nach Anspruch 1, **dadurch gekennzeichnet, dass** die erste Aktivierungseinrichtung (38) die Netzwerk-Komponente (16) nach Erhalt des Netzwerkfunktions-Kontrollsignals (30) aktiviert und der zweiten Aktivierungseinrichtung (42) anschließend ihrerseits ein weiteres Netzwerkfunktions-Kontrollsignal (30) zur Bestätigung der Aktivierung zusendet.

3. Verfahren nach einem der vorhergehenden Ansprüche, **dadurch gekennzeichnet, dass** die zweite Aktivierungseinrichtung (42) die Switch-Einrichtung (14) nach Erhalt des weiteren Netzwerkfunktions-Kontrollsignals (30) in einen Sende-/Empfangszustand bringt.

4. Verfahren nach einem der vorhergehenden Ansprüche, **dadurch gekennzeichnet, dass** das Netzwerksystem (10) ein Ethernet-Netzwerk ist.

5. Verfahren nach einem der vorhergehenden Ansprüche, **dadurch gekennzeichnet, dass** das Netzwerksystem (10) eine von der zentralen Netzwerkeinrichtung (12), der mindestens einen Switch-Einrichtung (14) und den Netzwerk-Komponenten (16) gebildete Baum-Topologie aufweist.

6. Verfahren nach einem der vorhergehenden Ansprüche, **dadurch gekennzeichnet, dass** die Netzwerk-Komponente (16) und/oder die zentrale Netzwerkeinrichtung (10) ein Steuergerät einer Fahrzeug-Komponente ist oder zumindest Teil eines solchen Steuergerätes ist.

7. Netzwerksystem (10) eines Kraftfahrzeugs, eingerichtet zur Durchführung eines Verfahrens nach einem der Ansprüche 1 bis 6, wobei eine zentrale Netzwerkeinrichtung (12), die über einen Pfad innerhalb des Netzwerksystems (10) mit der Netzwerk-Komponente (16) signaltechnisch verbunden ist, wobei der Pfad zumindest teilweise über ein Netzwerk-Segment (26) des Netzwerksystems (10) führt und das Netzwerk-Segment (26) die Netzwerk-Komponente (16) und eine ihr zugeordnete erste Aktivierungseinrichtung (38) unverzweigt mit einer im Pfad angeordneten Switch-Einrichtung (14) und einer ihr zugeordneten zweiten Aktivierungseinrichtung (42) signaltechnisch verbindet, und wobei die erste Aktivierungseinrichtung (38) von der zentralen Netzwerkeinrichtung (12) durch Senden eines Netzwerkfunktions-Kontrollsignals (30) mittels der Switch-Einrichtung (14) ansprechbar ist, **dadurch gekennzeichnet, dass** die Netzwerk-Komponente (16) oder die ihr zugeordnete erste Aktivierungseinrichtung (38) von der zentralen Netzwerkeinrichtung (12) mittels der Switch-Einrichtung (14) über mindestens eine Signalleitung (36) des Netzwerk-Segments (26) mit elektrischer Energie versorgbar ist, und dass die Anordnung aus versorgender Switch-Einrichtung (14), versorgter Netzwerk-Komponente (16), erster und zweiter Aktivierungseinrichtung (38, 42) sowie der diese verbindenden Signalleitung (36) eine Energieversorgung simultan zur wechselseitigen Signalübertragung zwischen der ersten und der zweiten Aktivierungseinrichtung (38, 42) über die Signalleitung (36) ermöglicht.

8. Netzwerksystem nach Anspruch 7, **dadurch gekennzeichnet, dass** das Netzwerksystem (10) ein Ethernet-Netzwerk ist.

9. Netzwerksystem nach einem der Ansprüche 7 oder 8, **gekennzeichnet durch** eine von der zentralen Netzwerkeinrichtung (12), der mindestens einen Switch-Einrichtung (14) und den Netzwerk-Komponenten (16) gebildete Baum-Topologie.

10. Kraftfahrzeug mit einem Netzwerksystem (10) nach einem der Ansprüche 7 bis 9.

## Claims

1. Method for activating a temporarily inactive network component (16) of a network system (10) for a motor vehicle, wherein a central network device (12) of the network system (10) is connected via signals to the network component (16) via a path inside the network system (10), which leads at least partially across a network segment (26) of the network system (10), the network segment (26) connecting via signals the network component (16) and an associated first activation device (38) unbranched to a switch device (14) arranged in the path and to an associated second activation device (42), and the central network device (12) addressing the first activation device (38) by means of the switch device (14) by sending a network function control signal (30), **characterized in that** the central network device (12) supplies the network component (16) or the first activation device (38) additionally with electrical power during the activation, by means of the switch device (14) via at least one signal line (36) of the network segment (26), and **in that** the power is supplied simultaneously for the two-way alternate signal transmission between the first and the second activation device (38, 42) via the signal line (36).

2. Method according to Claim 1, **characterized in that** the first activation device (38) activates the network component (16)
after receipt of the network function control signal (30) and subsequently in turn sends out a further network function control signal (30) to the second activation device (42) for confirming the activation.

3. Method according to one of the preceding claims, **characterized in that** the second activation device (42) brings the switch device (14) into a transmitting/receiving state after receipt of the further network function control signal (30).

4. Method according to one of the preceding claims, **characterized in that** the network system (10) is an Ethernet network.

5. Method according to one of the preceding claims, **characterized in that** the network system (10) has a tree topology formed by the central network device (12), the at least one switch device (14) and the network components (16).

6. Method according to one of the preceding claims, **characterized in that** the network component (16) and/or the central network device (10) is a control device of a vehicle component or at least part of such a control device.

7. Network system (10) of a motor vehicle, configured for carrying out a method according to one of Claims 1 to 6, wherein a central network device (12) which is connected via signals to the network component (16) via a path within the network system (10), the path leading at least partially across a network segment (26) of the network system (10) and the network segment (26) connecting via signals the network component (16) and an associated first activation device (38) unbranched to a switch device (14) arranged in the path and to an associated second activation device (42), and wherein the first activation device (38) can be addressed by the central network device (12) by sending a network function control signal (30) by means of the switch device (14), **characterized in that** the network component (16) or its associated first activation device (38) can be supplied with electrical power by the central network device (12) by means of the switch device (14) via at least one signal line (36) of the network segment (26), and **in that** the arrangement of supplying switch device (14), supplied network component (16), first and second activation device (38, 42) and the signal line (36) connecting these enables power to be supplied simultaneously for the two-way alternate signal transmission between the first and the second activation device (38, 42) via the signal line (36).

8. Network system according to Claim 7, **characterized in that** the network system (10) is an Ethernet network.

9. Network system according to either of Claims 7 and 8, **characterized by** a tree topology formed by the central network device (12), the at least one switch device (14) and the network components (16).

10. Motor vehicle having a network system (10) according to one of Claims 7 to 9.

## Revendications

1. Procédé pour activer un composant de réseau (16) temporairement inactif d'un système de réseau (10) destiné à un véhicule automobile, dans lequel un dispositif de réseau central (12) du système de réseau (10) est relié par échange de signaux au composant de réseau (16) par l'intermédiaire d'un trajet situé à l'intérieur du système de réseau (10), qui passe au moins partiellement par l'intermédiaire d'un segment de réseau (26) du système de réseau (10), dans lequel le segment de réseau (26) relie, sans ramification, le composant de réseau (16) à un premier dispositif d'activation (38) qui lui est associé au moyen d'un dispositif de commutation (14) disposé sur le trajet et à un deuxième dispositif d'activation (42) qui lui est associé et dans lequel le dispositif de réseau central (12) répond au premier dispositif d'activation (38) au moyen du dispositif de commutation (14) en envoyant un signal de commande de fonction de réseau (30), **caractérisé en ce que**, lors de l'activation, le dispositif de réseau central (12) alimente en outre en énergie électrique le composant de réseau (16) ou le premier dispositif d'activation (38) au moyen du dispositif de commutation (14) par l'intermédiaire d'une ligne de signal (36) du segment de réseau (26), et **en ce que** l'alimentation en énergie est effectuée en même temps que la transmission réciproque de signaux entre les premier et deuxième dispositifs d'activation (38, 42) par l'intermédiaire de la ligne de signal (36).

2. Procédé selon la revendication 1, **caractérisé en ce que** le premier dispositif d'activation (38) active le composant de réseau (16) après obtention du signal de commande de fonction de réseau (30) et **en ce que** le deuxième dispositif d'activation (48) envoie ensuite de son côté un autre signal de commande de fonction de réseau (30) pour confirmer l'activation.

3. Procédé selon l'une quelconque des revendications précédentes, **caractérisé en ce que** le deuxième dispositif d'activation (42) fait passer le dispositif de commutation (14) dans un état d'émission/réception après obtention de l'autre signal de commande de fonction de réseau (30).

4. Procédé selon l'une quelconque des revendications précédentes, **caractérisé en ce que** le système de réseau (10) est un réseau Ethernet.

5. Procédé selon l'une quelconque des revendications précédentes, **caractérisé en ce que** le système de réseau (10) présente une topologie arborescente formée par le dispositif de réseau central (12), l'au moins un dispositif de commutation (14) et les composants de réseau (16).

6. Procédé selon l'une quelconque des revendications précédentes, **caractérisé en ce que** le composant de réseau (16) et/ou le dispositif de réseau central (10) est un appareil de commande d'un composant de véhicule ou au moins une partie d'un tel appareil de commande.

7. Système de réseau (10) d'un véhicule automobile, conçu pour mettre en oeuvre un procédé selon l'une quelconque des revendications 1 à 6, comportant un dispositif de réseau central (12) qui est relié par échange de signaux au composant de réseau (16) par l'intermédiaire d'un trajet situé à l'intérieur du système de réseau (10), dans lequel le trajet passe au moins partiellement par l'intermédiaire d'un segment de réseau (26) du système de réseau (10), et le segment de réseau (26) relie, sans ramification, par échange de signaux le composant de réseau (16) à un premier dispositif d'activation (38) qui lui est associé à un dispositif de commutation (14) disposé sur le trajet et à un deuxième dispositif d'activation (42) qui lui est associé et dans lequel le premier dispositif d'activation (38) peut répondre au dispositif de réseau central (12) en envoyant un signal de fonction de réseau (30) au moyen du dispositif de commutation (14), **caractérisé en ce que** le composant de réseau (16) ou le premier dispositif d'activation (38) qui lui est associé peut être alimenté en énergie électrique par le dispositif de réseau central (12) au moyen du dispositif de commutation (14) par l'intermédiaire d'au moins une ligne de signal (36) du segment de réseau (26), et **en ce que** le système constitué par le dispositif de commutation (14) fournissant l'alimentation, le composant de réseau (16) alimenté, les premier et deuxième dispositifs d'activation (38, 42) et par la ligne de signal (36) qui les relie entre eux, permet une alimentation en énergie effectuée en même temps que la transmission réciproque de signaux entre les premier et deuxième dispositifs d'activation (38, 42) par l'intermédiaire de la ligne de signal (36).

8. Système de réseau selon la revendication 7, **caractérisé en ce que** le système de réseau (10) est un réseau Ethernet.

9. Système de réseau selon l'une quelconque des revendications 7 ou 8, **caractérisé par** une topologie arborescente formée par le dispositif de réseau central (12), l'au moins un dispositif de commutation (14) et les composants de réseau (16).

10. Véhicule automobile comportant un système de réseau (10) selon l'une quelconque des revendications 7 à 9.
